# EUROPEAN PATENT SPECIFICATION

(11) **EP 2 711 115 B1**
(45) Date of publication and mention of the grant of the patent: **22.11.2017**
(21) Application number: 11865696.6
(22) Date of filing: 16.05.2011
(51) Int. Cl.: B23B 51/06, B23B 51/00

(54) **DRILL HEAD FOR DEEP HOLE CUTTING**
BOHRKOPF ZUM SCHNEIDEN TIEFER LÖCHER
TÊTE DE FORAGE POUR LE PERÇAGE DE TROUS PROFONDS

(43) Date of publication of application: 26.03.2014
(73) Proprietor: botek Präzisionsbohrtechnik GmbH, 72585 Riederich (DE)
(72) Inventor: Nomura, Takuji, Hyogo 661-0976 (JP)
(74) Representative: Jakelski & Althoff Patentanwälte PartG mbB
(86) International application number: PCT/JP2011/061180
(87) International publication number: WO 2012/157062

(56) References cited:
- EP-A1- 0 513 374
- EP-A1- 2 272 611
- EP-A1- 2 298 478
- DE-U1- 9 312 802
- DE-U1- 9 407 575
- JP-A- 6 091 416
- JP-A- S5 491 889
- JP-A- 2008 254 089
- JP-U- 56 104 812

## Description

### [Technical Field]

The present invention relates to a drill head according to the preamble of claim 1 for deep-hole drilling including cutting blades of an indexable (also called throw-away) type or a brazed type mounted on a distal end portion of a head main body. Such a drill head is known from EP 2 272 611 A.

### [Background Art]

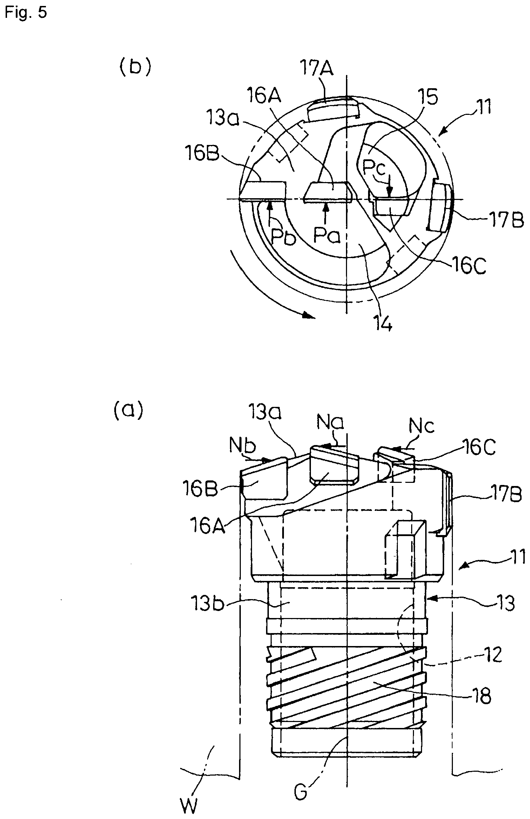

Fig. 5(a) is a front view showing a conventional drill head on which cutting blades of a brazed type are mounted, and Fig. 5(b) is a plan view thereof. The drill head 11 shown in these drawings has a substantially cylindrical head main body 13 with a hollow portion 12 opened at the proximal end side, and a substantially obtuse conical head distal end surface 13a formed with one large and one small cutting chip discharge ports 14 and 15 communicating with the hollow portion 12, the central cutting blade 16A and the outer circumferential cutting blade 16B are brazed to an opening side edge along a head radial direction of the large cutting chip discharge port 14, and the intermediate cutting blade 16C is brazed to an opening side edge along the head radial direction of the small cutting chip discharge port 15. Guide pads 17A and 17B are fixed to the distal end side of the outer circumferential surface 13b of the head main body 13, and a male thread portion 18 is formed on the proximal end side.

In deep-hole drilling work, the proximal end side of the drill head 11 is threaded into and mounted on the distal end portion of a hollow boring bar (not shown) by the male thread portion 18, and the boring bar is coupled to a driving shaft such as a spindle of a machine tool and rotatingly-driven or otherwise rotates the work material W side, thereby drilling the work material W by cutting blades 16A to 16C to form a deep hole. Moreover, it is noted that a relative rotation direction of the drill head 11 is a counterclockwise direction indicated by the arrow in Fig. 5. During the deep-hole drilling work, a coolant is supplied into a cutting region through a gap between a cutting hole and the boring bar at high pressure, made to flow from the cutting chip discharge ports 14 and 15 into the hollow portion 12 together with cutting chips generated in the cutting region, and discharged outside through the inside of the hollow boring bar.

When a cutting blade of this type is mounted on the head main body 3 in the head radial direction with respect to the central axis, for cutting up to the central portion of the work material, the blade point portion of the cutting blade must accurately pass through the central axis. However, the cutting speed at the head main body central portion is theoretically zero, so that the blade point portion of this portion is loaded with thrust resistance, called chisel edge, and is a portion to which no cutting force is applied, and this portion contributes to the impossibility of an improvement in cutting performance. In order to avoid this, the central cutting blade 16A to be mounted on the distal end portion of the head main body 13 of the drill head 11 shown in Figs. 5 has a blade edge formed linearly inclined downward from the distal end portion toward the central axis G and a proximal end portion beyond the central axis lowers toward the center although each of the outer circumferential cutting blade 16B and the intermediate cutting blade 16C is inclined upward in a direction from the proximal end portion linearly toward the central axis G as shown in Fig. 5(a).

### [Summary of the Invention]

### [Problem to be Solved by the Invention]

In deep-hole drilling work using the conventional drill head 11 formed so that, as described above, the blade edge of the central cutting blade is formed linearly inclined downward in a direction from the proximal end portion toward the central axis G, principal forces of cutting resistances applied to the blade edges of the cutting blades 16A to 16C directly relate to cutting and are indicated as Pa, Pb, and Pc in Fig. 5(b), and radial forces necessary for pressing the cutting blades against a work material are indicated as Na, Nb, and Nc in Fig. 5(a). In this case, as shown in Fig. 5(a), radial forces Nb and Nc of the outer circumferential cutting blade 16B and the intermediate cutting blade 16C respectively act radially inward toward the central axis G, however, the radial force Na of the central cutting blade 16A acts radially outward. Therefore, the central cutting blade 16A is pressed radially outward, and the diameter of a cutting hole easily becomes unexpectedly large, and the hole drilling accuracy deteriorates.

The present invention was made in view of the foregoing circumstances, and accordingly it is an object of the present invention to provide a drill head for deep-hole drilling which can be improved in hole drilling accuracy and straightness by making the radial force of the central cutting blade act radially inward, the direction toward the central axis, as well as other blades, and can realize cutting up to a central portion of a work material.

### [Means for Solving the Problem]

The aforementioned problem is solved by the provision of a drill head according to claim 1. A drill head for deep-hole drilling according to the present invention including a plurality of cutting blades 6A to 6C provided along a head radial direction from the central axis G side to the outer circumferential side of a distal end portion of a head main body 3, wherein blade edges 10, 20, and 30 of the cutting blades 6A to 6C are provided to be inclined upward toward the central axis G, the blade edge 10 of the central cutting blade is formed inclined upward linearly from the proximal end portion 10o side to a point 21 slightly before the point 22 on the central axis G, and is rounded at the blade edge distal end portion 25 side extending downward beyond the point 22 on the central axis G from the point 21 slightly before the point 22.

A drill head according to the present invention is configured such that a distance η of the blade edge portion 24 from the point 21 slightly before the point 22 on the central axis G to the point 22 on the central axis G on the linear upward incline blade edge 23 is 0.1 mm to 0.8 mm.

A drill head according to the present invention is configured such that the radius of curvature R of the rounded blade edge distal end portion 25 is 0.5 mm to 3 mm.

A preferred embodiment of the present invention is configured such that the blade edge portion 24 forms an inner cutting blade angle θ when the blade edge portion 24 overlaps the central axis G in the drill head for deep-hole drilling of the third aspect.

A preferred embodiment of the present invention is configured such that the inner cutting blade angle θ is 3° to 15° in the drill head for deep-hole drilling.

A preferred embodiment of the present invention is configured such that a plurality of cutting blades 6A to 6C are fixed along the head radial direction from the central axis G side to the outer circumferential side of the distal end portion of the head main body 3 by bolts 8 in the drill head for deep-hole drilling.

A preferred embodiment of the present invention is configured such that at least one of the plurality of cutting blades 6A to 6C is formed of a two-fold symmetrical parallelogram thick plate whose upper side and lower side are formed symmetrically about a mounting portion formed by the bolt 8 in the drill head for deep-hole drilling.

A preferred embodiment of the present invention is configured such that the plurality of cutting blades 6A to 6C are fixed by brazing along the head radial direction from the central axis G side to the outer circumferential side of the distal end portion of the head main body 3 in the drill head for deep-hole drilling.

A preferred embodiment of the present invention is configured such that the plurality of cutting blades 6A to 6C are of the indexable type in the drill head for deep-hole drilling.

A preferred embodiment of the present invention is configured such that the plurality of cutting blades 6A to 6C are a central cutting blade 6A, an outer circumferential cutting blade 6B, and an intermediate cutting blade 6C in the drill head for deep-hole drilling.

### [Effects of the Invention]

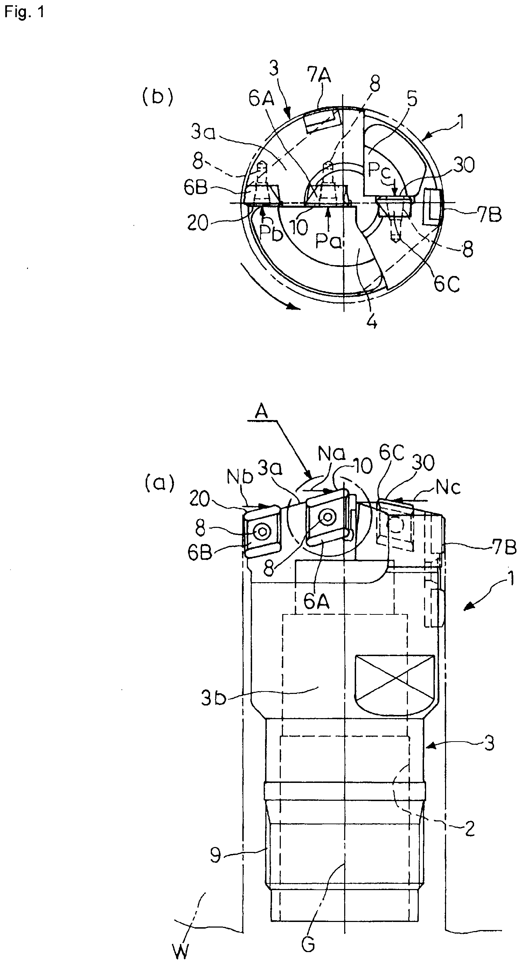

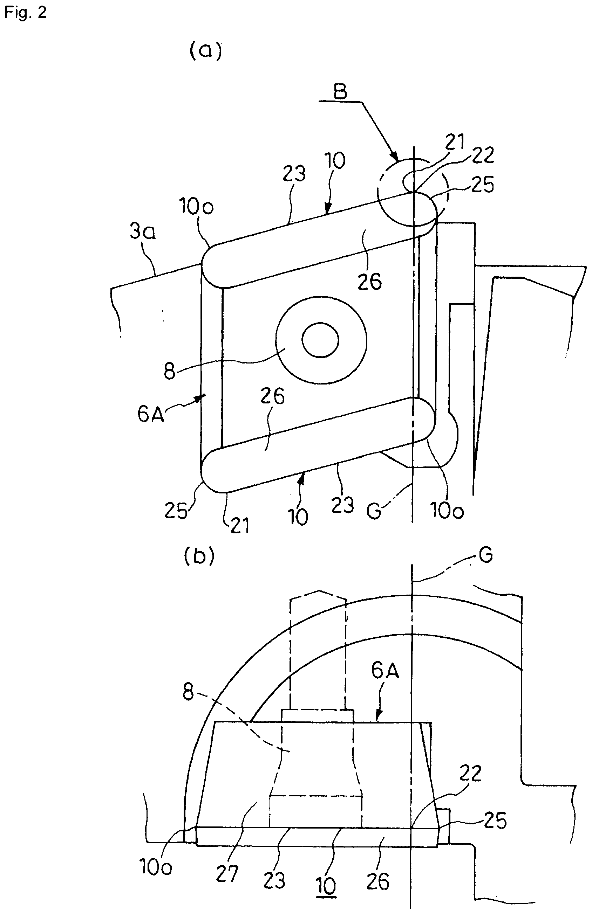

Effects of the above-mentioned solution means of the present invention will be described with reference numerals of the embodiments which are described later. First, according to the present invention, as shown in Figs. 1 and Figs. 2, blade edges 10, 20, and 30 of all the cutting blades 6A to 6C are mounted on the distal end portion of the head main body 3 so as to be inclined upward toward the central axis G. Therefore, in deep-hole drilling work using the drill head 1, radial forces Na, Nb, and Nc necessary for pressing the cutting blades 6A to 6C against the work material W respectively act radially inward toward the central axis G, and accordingly, the cutting blades 6A and 6C are pressed substantially radially inward, and the diameter of a cutting hole is prevented from becoming unexpectedly large, and the hole drilling accuracy and hole straightness are improved. An embodiment shown below gives an example in which three cutting blades 6A to 6C are provided on the head main body 3, however, the number of blades is not limited to three in the present invention, and the present invention is also applicable to a drill head on which a plurality of cutting blades, for example, five blades or seven blades are provided.

According to the present invention, the terminal end position on the central axis side of the blade edge 10 of the central cutting blade 6A is at the point 21 slightly before the point 22 on the central axis G on the linear upward incline blade edge 23, and the blade edge distal end portion 25 side extending downward beyond the point 22 on the central axis G from the point 21 slightly before the point 22 is rounded. Therefore, the work material W can be cut up to the central portion by the central cutting blade 6A, the blade edge 10 is not loaded with a thrust resistance at the central portion of the work material W, nor is the distal end portion of the blade edge 10 broken.

Moreover, according to the present invention, the distance η of the blade edge portion 24 from the point 21 slightly before the point 22 on the central axis G to the point 22 on the central axis G on the linear upward incline blade edge 23 is 0.1 mm to 0.8 mm, and the radius of curvature R of the arc-shaped blade edge distal end portion 25 extending downward beyond the point 22 on the central axis G from the point 21 slightly before the point 22 is 0.5 mm to 3 mm. The blade edge portion 24 forms an inner cutting blade angle θ when the blade edge portion 24 overlaps the central axis G, so that cutting is performed by this blade edge portion 24, and no uncut portion is left in the central portion of the work material W. If the distance η is less than 0.1 mm, processing of the blade edge becomes very difficult or nearly impossible, and if the distance η of the blade edge portion 24 is more than 0.8 mm, the blade edge portion 24 cannot form the inner cutting angle θ and may cause the central portion of the work material W to be left uncut.

Further, according to the present invention, the radius of curvature R of the rounded blade edge distal end portion 25 extending downward beyond the point 22 on the central axis G from the point 21 slightly before the point 22 on the central axis G on the linear upward incline blade edge 23 is 0.5 mm to 3 mm, and if the radius of curvature R is less than 0.5 mm, the distance η of the blade edge portion 24 becomes less than 0.1 mm, so that processing of the blade edge becomes very difficult or nearly impossible, and if the radius of curvature R becomes more than 3 mm, the blade edge portion 24 substantially collinearly overlaps the linear upward incline blade edge 23, and cannot form an inner cutting blade angle. Other effects will be clarified from the following embodiment.

### [Brief Description of the Drawings]

Fig. 1(a) is a front view of a drill head for deep-hole drilling according to the present invention, including cutting blades of the indexable type, and Fig. 1(b) is a plan view thereof.
Fig. 2(a) is an enlarged view of the portion indicated by an arrow A in Fig. 1(a), and Fig. 1(b) is a plan view of the same portion.
Fig. 3 is an enlarged view of the portion indicated by an arrow B in Fig. 2.
Fig. 4(a) is a front view of a drill head for deep-hole drilling according to the present invention, including cutting blades of the brazed type, and Fig. 4 (b) is a plan view thereof.
Fig. 5(a) is a front view of a conventional drill head for deep-hole drilling, and Fig. 5(b) is a plan view thereof.

### [Mode(s) for Carrying Out the Invention]

A preferred embodiment of the present invention will be described hereinafter based on the drawings. Figs. 1 show a drill head 1 for deep-hole drilling according to the present invention, and similar to the drill head 11 shown in Figs. 5, this drill head 1 includes a substantially cylindrical head main body 3 that has a hollow portion 2 opened at the proximal end side, and on a substantially obtuse conical head distal end surface 3a of this head main body 3, one large and one small cutting chip discharge ports 4 and 5 communicating with the hollow portion 2 are provided, a central cutting blade 6A and an outer circumferential cutting blade 6B of the indexable (throw-away) type are fixed to the opening side edge along the head radial direction of the large cutting chip discharge port 4 by bolts 8, and an intermediate cutting blade 6C of the indexable type is similarly fixed to the opening side edge along the head radial direction of the small cutting chip discharge port 5 by another bolt 8. Also, the guide pads 7A and 7B are fixed by bolts not shown to the distal end side of the outer circumferential surface 3b of the head main body 3, and a male thread 9 is formed on the proximal end side of the head main body 3. The use of this drill head is the same as that of the conventional drill head 11 described in Figs. 5.

In this drill head 1, as shown in Fig. 1(a), all of the central cutting blade 6A, the outer circumferential cutting blade 6B, and the intermediate cutting blade 6C are mounted on the substantially obtuse conical head distal end surface 3a of the head main body 3 by the bolts 8 in such a manner that the blade edges 10, 20, and 30 of the cutting blades 6A to 6C are inclined upward toward the central axis G.

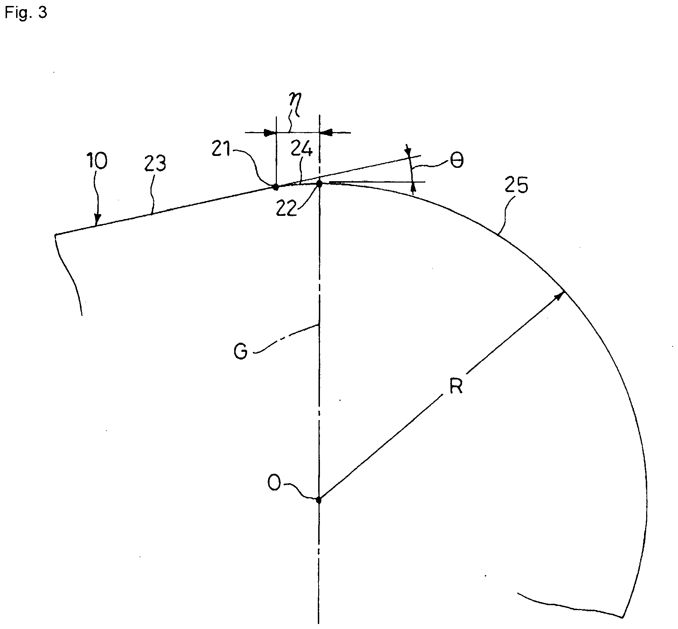

Figs. 2 are enlarged views of the portion indicated by the arrow A in Fig. 1(a), that is, the central cutting blade 6A, and Fig. 3 is an enlarged view of the portion indicated by the arrow B in Fig. 2, that is, a part of the central cutting blade 6A. The blade edge 10 of this central cutting blade 6A is formed inclined upward linearly from the proximal end portion 10o (downstream end portion) to the point 21 slightly before the point 22 on the central axis G, and is rounded on the blade edge distal end portion side extending downward beyond the point 22 on the central axis G from the point 21, that is, the terminal end position 21 on the linear upward incline blade edge 23, and the center of curvature of the rounded portion 25 is indicated as O and the radius thereof is indicated as R. In Fig. 2(a) and Fig. 2(b), the reference numeral 26 denotes a cutting face, and 27 denotes a flank face.

In this case, portions that actually perform cutting on the blade edge 10 of the central cutting blade 6A are the linear upward incline blade edge 23 from the proximal end portion 10o to the point 21 slightly before the point 22 on the central axis G as shown in Figs. 2, and the arc-shaped blade edge portion 24 from the point 21 slightly before the point 22 on the central axis G to the point 22 on the central axis G as shown in Fig. 3. The rounded blade edge distal end portion 25 extending continuously downward at the same radius of curvature R as of the arc-shaped blade edge portion 24 from the point 22 on the central axis G on the blade edge 10 is a non-cutting blade edge portion that does not actually perform cutting.

In this case, the distance η of the blade edge portion 24 from the point 21 (terminal end position 21 of the linear upward incline blade edge 23) slightly before the point 22 on the central axis G of the linearly upward incline blade edge 23 to the point 22 on the central axis G is set to 0.1 mm to 0.8 mm, and the radius of curvature of the rounded portion 25 is set to 0.5 mm to 3 mm.

Moreover, this central cutting blade 6A of the indexable type is formed of a parallelogram two-fold symmetrical thick plate whose upper side and lower side are formed symmetrically about a mounting portion formed by the bolt 8 as shown in Figs. 2, so that the blade edge 10 is formed on each of the upper and lower sides symmetrically vertical.

As described above, in the drill head 1 according to the present invention, the blade edges 10, 20, and 30 of all the cutting blades 6A to 6C are mounted on the substantially obtuse conical head distal end surface 3a of the head main body 3 so as to be inclined upward toward the central axis G, and therefore, in deep-hole drilling work using this drill head 1, the principal forces Pa, Pb, and Pc of cutting resistances to be applied to the blade edges 10, 20, and 30 of the cutting blades 6A to 6C are as shown in Fig. 1(b), however, radial forces Na, Nb, and Nc necessary for pressing the cutting blades 6A to 6C against the work material W respectively act radially inward toward the central axis G, as shown in Fig. 1(a), and accordingly, all cutting blades 6A to 6C are pressed radially inward, and the diameter of a cutting hole is prevented from becoming unexpectedly large, and hole drilling accuracy and hole straightness are improved.

In this case, the blade edge 10 of the central cutting blade 6A is at the point 21 0.1 mm to 0.8 mm before the point 22 on the central axis G, and the blade edge distal end portion 25 side extending downward beyond the point 22 on the central axis G from the point 21 is rounded at a radius of curvature of 0.5 mm to 3 mm. Therefore, the work material W can be cut up to its central portion by the central cutting blade 6A, and no uncut zone is left. Accordingly, at the central portion of the work material W, the blade edge 10 is not loaded with a thrust resistance, nor is the distal end portion of the blade edge 10 broken.

A reason for setting of 0.1 mm to 0.8 mm as the distance η of the blade edge portion 24 from the point 21 (terminal end of the linear upward incline blade edge 23) slightly before the point 22 on the central axis G to the point 22 on the central axis G on the linear upward incline blade edge 23 is as follows.

That is, it is ideal that the terminal end 21 of the linear upward incline blade edge 23 is positioned on the central axis G, specifically, the distance η of the blade edge portion 24 from the terminal end 21 of the linear upward incline blade edge 23 to the point 22 on the central axis G is zero, however, this is impossible because a processing error occurs in actual machining work, and therefore, the distance η is set to 0.1 mm to 0.8 mm. If the distance η is less than 0.1 mm, processing of the blade edge becomes very difficult or nearly impossible, and this processing is possible as long as the distance is not less than 0.1 mm. Therefore, 0.1 mm is set as a lower limit of the distance.

When the distance η of the blade edge portion 24 is approximately 0.1 mm to 0.8 mm, as long as the radius of curvature R of the rounded blade edge distal end portion 25 extending downward beyond the point 22 on the central axis G from the terminal end 21 of the linear upward incline blade edge 23 is 0.5 mm to 3 mm, the blade edge portion 24 forms an inner cutting blade angle θ when this blade edge portion 24 overlaps the central axis G. Therefore, cutting is performed by this blade edge portion 24, and the central portion of the work material W is prevented from being left uncut. Also, if the distance η of the blade edge portion 24 is more than 0.8 mm, the blade edge portion 24 does not form an inner cutting blade angle θ and may cause the central portion of the work material W to be left uncut.

The reason for setting of 0.5 mm to 3 mm as the radius of curvature R of the rounded blade edge distal end portion 25 extending downward beyond the point 22 on the central axis G from the terminal end 21 of the linear upward incline blade edge 23 is because, if the radius of curvature R is less than 0.5 mm, the distance η of the blade edge portion 24 becomes less than 0.1 mm, and if the radius of curvature R is more than 3 mm, the blade edge portion 24 substantially collinearly overlaps the linear upward incline blade edge 23 and cannot form the inner cutting blade angle θ. The inner cutting blade angle θ is preferably formed in a range of 3° to 15° in view of convenience for discharge of cutting chips.

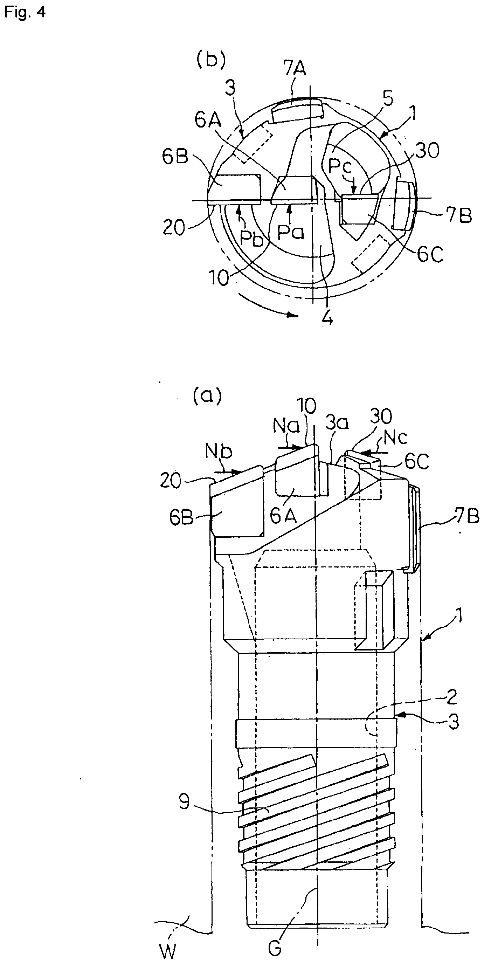

Figs. 4 show a drill head 1 including cutting blades 6A to 6C of the brazed type. Similar to the drill head 1 having cutting blades 6A to 6C of the indexable type shown in Figs. 1, on the head distal end surface 3a of the head main body 3, one large and one small cutting chip discharge ports 4 and 5 communicating with the hollow portion 2 of the head main body 3 are provided, the central cutting blade 6A and the outer circumferential cutting blade 6B are fixed by brazing to the opening side edge along a head radial direction of the large cutting chip discharge port 4, and the intermediate cutting blade 6C is fixed by brazing to the opening side edge along the head radial direction of the small cutting chip discharge port 5. Guide pads 7A and 7B are also fixed by brazing to the distal end side of the outer circumferential surface 3b of the head main body 3, and a male thread 9 is formed on the proximal end side of the head main body 3.

Similar to the drill head 1 of the above-described embodiment, as shown in Fig. 3, the blade edge 10 of the central cutting blade 6A of this drill head 1 is formed inclined upward linearly from the proximal end portion 10o to the point 21 slightly before the point 22 on the central axis G, and is rounded at the blade edge distal end portion side extending downward beyond the point 22 on the central axis G from this point 21, that is, the terminal end position 21 of the linear upward incline blade edge 23 although this is not shown. Therefore, the work material W can be cut up to its central portion by this central cutting blade 6A, the blade edge 10 is not loaded with a thrust resistance at the central portion of the work material W, nor is the distal end portion of the blade edge 10 broken.

The blade edges 10, 20, and 30 of the cutting blades 6A to 6C are mounted on the substantially obtuse conical head distal end surface 3a of the head main body 3 so as to be inclined upward toward the central axis G, so that in deep-hole drilling work, principal forces Pa, Pb, and Pc that are applied to the blade edges 10, 20, and 30 of the cutting blades 6A to 6C are as shown in Fig. 4(b), and radial forces Na, Nb, and Nc necessary for pressing the cutting blades 6A to 6C against the workmaterial W respectively act radially inward toward the central axis G as shown in Fig. 4(a). Accordingly, as in the case of the above-described embodiment, all the cutting blades 6A to 6C are pressed radially inward, the diameter of a cutting hole is prevented from becoming unexpectedly large, and the hole drilling accuracy and the hole straightness are improved.

In the above-described embodiments, the drill head 1 including three cutting blades of the indexable type and the drill head 1 including three cutting blades of the brazed type are described, however, the numbers of cutting blades of these types are not limited to the numbers of these embodiments, and may be, for example, 5 or 7 as long as the number is plural.

### [Description of the Reference Symbols]

1 Drill head
3 Head main body
G Central axis
6A Central cutting blade
6B Outer circumferential cutting blade
6C Intermediate cutting blade
10 Blade edge of central cutting blade
21 Terminal end of linear upward incline blade edge on blade edge of central cutting blade
22 Position on central axis
23 Linear upward incline blade edge of blade edge of central cutting blade
24 Arc-shaped blade edge portion formed from terminal end of linear upward incline blade edge to point on central axis

## Claims

1. A drill head (1) for deep-hole drilling including a plurality of cutting blades (6A, 6B, 6C) provided along a head radial direction from the central axis side to the outer circumferential side of a distal end portion of a head main body (3) and guide pads (7A, 7B) fixed to the distal end side of the outer circumferential surface of the head main body (3), wherein blade edges of all the cutting blades are provided inclined upward toward the central axis, **characterised in that** the blade edge (23) of the central side cutting blade is formed inclined upward linearly from the proximal end portion side to a point (21) slightly before a point (22) on the central axis (G), and is rounded at the blade edge distal end portion side extending downward beyond the point (22) on the central axis (G) from the point (21) slightly before the point on the central axis, that a distance (η) of the blade edge portion (24) from the point (21) on the linear upward incline blade edge (23) slightly before the point (22) on the central axis (G) to the point (22) on the central axis (G) is 0.1 mm to 0.8 mm and that the radius of curvature (R) of the rounded blade edge distal end portion (25) is 0.5 mm to 3 mm.

2. The drill head (1) for deep-hole drilling according to Claim 1, wherein the blade edge portion (24) forms an inner cutting blade angle (θ) when the blade edge portion overlaps the central axis.

3. The drill head (1) for deep-hole drilling according to Claim 2, wherein the inner cutting blade angle (θ) is 3° to 15°.

4. The drill head (1) for deep-hole drilling according to Claim 1, wherein a plurality of cutting blades (6A, 6B, 6C) are fixed along the head radial direction from the central axis side to the outer circumferential side of the distal end portion of the head main body by bolts (8).

5. The drill head (1) for deep-hole drilling according to Claim 4, wherein at least one of the plurality of cutting blades (6A, 6B, 6C) is formed of a parallelogram two-fold symmetrically thick plate whose upper side and lower side are formed symmetrically about a mounting portion formed by the bolt (8).

6. The drill head (1) for deep-hole drilling according to Claim 1, wherein the plurality of cutting blades (6A, 6B, 6C) are fixed by brazing along the head radial direction from the central axis side to the outer circumferential side of the distal end portion of the head main body (3).

7. The drill head (1) for deep-hole drilling according to Claim 1, wherein the plurality of cutting blades (6A, 6B, 6C) are of an indexable type.

8. The drill head (1) for deep-hole drilling according to Claim 1, wherein the plurality of cutting blades (6A, 6B, 6C) are a central cutting blade (6A), an outer circumferential cutting blade (6B), and an intermediate cutting blade (6C).

## Patentansprüche

1. Bohrkopf (1) zum Tiefbohren, der eine Mehrzahl von Schneidklingen (6A, 6B, 6C) umfasst, die entlang einer radialen Kopfrichtung von der Mittelachsenseite zur äußeren Umfangsseite eines distalen Endabschnitts eines Hauptkörpers (3) des Kopfes bereitgestellt sind, und Führungsleisten (7A, 7B), die an der distalen Endseite der äußeren Umfangsfläche des Hauptkörpers (3) des Kopfes befestigt sind, wobei Schneidkanten aller Schneidklingen nach oben zur Mittelachse hin geneigt bereitgestellt sind, **dadurch gekennzeichnet, dass** die Schneidkante (23) der mittleren Seitenschneidklinge von der Seite des proximalen Endabschnitts linear nach oben zu einem Punkt (21), der kurz vor einem Punkt (22) auf der Mittelachse (G) liegt, geneigt ausgebildet ist und auf der Seite des distalen Endabschnitts der Schneidkante , die sich vom Punkt (21) kurz vor dem Punkt auf der Mittelachse über den Punkt (22) auf der Mittelachse (G) hinaus nach unten erstreckt, abgerundet ist, dass ein Abstand (η) des Schneidkantenabschnitts (24) vom Punkt (21) auf der linear nach oben geneigten Schneidkante (23) kurz vor dem Punkt (22) auf der Mittelachse (G) zum Punkt (22) auf der Mittelachse (G) 0,1 mm bis 0,8 mm beträgt und der Krümmungsradius (R) des abgerundeten distalen Endabschnitts (25) der Klingenkante 0,5 mm bis 3 mm beträgt.

2. Bohrkopf (1) zum Tiefbohren nach Anspruch 1, wobei der Schneidkantenabschnitt (24) einen inneren Schneidenwinkel (θ) bildet, wenn der Schneidkantenabschnitt die Mittelachse überlappt.

3. Bohrkopf (1) zum Tiefbohren nach Anspruch 2, wobei der innere Schneidenwinkel (θ) 3° bis 15° beträgt

4. Bohrkopf (1) zum Tiefbohren nach Anspruch 1, wobei eine Mehrzahl von Schneidklingen (6A, 6B, 6C) entlang der radialen Kopfrichtung von der Mittelachsenseite zur äußeren Umfangsseite des distalen Endabschnitts des Hauptkörpers des Kopfes mit Schrauben (8) befestigt sind.

5. Bohrkopf (1) zum Tiefbohren nach Anspruch 4, wobei mindestens eine der Mehrzahl von Schneidklingen (6A, 6B, 6C) aus einer parallelogrammförmigen, zweifach symmetrischen dicken Platte gebildet ist, deren obere Seite und untere Seite um einen von der Schraube (8) gebildeten Montageabschnitt symmetrisch gebildet sind.

6. Bohrkopf (1) zum Tiefbohren nach Anspruch 1, wobei die Mehrzahl von Schneidklingen (6A, 6B, 6C) entlang der radialen Kopfrichtung von der Mittelachsenseite zur äußeren Umfangsseite des distalen Endabschnitts des Hauptkörpers (3) des Kopfes mittels Löten befestigt sind.

7. Bohrkopf (1) zum Tiefbohren nach Anspruch 1, wobei die Mehrzahl von Schneidklingen (6A, 6B, 6C) vom Wendeplatten-Typ sind.

8. Bohrkopf (1) zum Tiefbohren nach Anspruch 1, wobei die Mehrzahl von Schneidklingen (6A, 6B, 6C) eine mittlere Schneidklinge (6A), eine Schneidklinge am äußeren Umfang (6B) und eine Zwischenschneidklinge (6C) sind.

## Revendications

1. Tête de forage (1) en vue d'un forage d'un trou profond comprenant une pluralité de lames de coupe (6A, 6B, 6C) disposées dans une direction radiale de tête du côté de l'axe central au côté circonférentiel extérieur d'une partie d'extrémité distale d'un corps principal de tête (3) et de patins de guidage (7A, 7B) fixés au côté d'extrémité distale de la surface circonférentielle extérieure du corps principal de tête (3), des faces de lame de toutes les lames de coupe étant inclinées vers le haut en direction de l'axe central, **caractérisée en ce que** la face de lame (23) de la lame de coupe côté central est formée inclinée vers le haut linéairement depuis le côté de la partie d'extrémité proximale (21) légèrement avant un point (22) sur l'axe central (G) et est arrondie sur le côté de la partie d'extrémité distale de face de lame s'étendant vers le bas au-delà du point (22) sur l'axe central (G) depuis le point (21) légèrement avant le point sur l'axe central, qu'une distance (η) de la partie de face de lame (24) du point (21) sur la face de lame linéaire d'inclinaison vers le haut (23) légèrement avant le point (22) sur l'axe central (G) vers le point (22) sur l'axe central (G) est de 0,1 mm à 0,8 mm et que le rayon de courbure (R) de la partie d'extrémité distale de face de lame arrondie (25) est de 0,5 mm à 3 mm.

2. Tête de forage (1) en vue d'un forage d'un trou profond selon la revendication 1, dans laquelle la partie de face de lame (24) forme un angle de lame de coupe intérieure (θ) lorsque la partie de face de lame enchevauche avec l'axe central.

3. Tête de forage (1) en vue d'un forage d'un trou profond selon la revendication 2, dans laquelle l'angle de lame de coupe intérieure (θ) est de 3° à 15°.

4. Tête de forage (1) en vue d'un forage d'un trou profond selon la revendication 1, dans laquelle une pluralité de lames de coupe (6A, 6B, 6C) est fixée dans la direction radiale de tête depuis le côté d'axe central vers le côté circonférentiel extérieur de la partie d'extrémité distale du corps principal de tête par des boulons (8).

5. Tête de forage (1) en vue d'un forage d'un trou profond selon la revendication 4, dans laquelle au moins une de la pluralité de lames de coupe (6A, 6B, 6C) est formée d'une plaque épaisse à deux épaisseurs symétriques en forme de parallélogramme dont le côté supérieur et le côté inférieur sont formés de manière symétrique autour d'une partie de montage formée par le boulon (8).

6. Tête de forage (1) en vue d'un forage d'un trou profond selon la revendication 1, dans laquelle la pluralité de lames de coupe (6A, 6B, 6C) est fixée par le brasage dans la direction radiale de tête du côté d'axe central au côté circonférentiel extérieur de la partie d'extrémité distale du corps principal de tête (3).

7. Tête de forage (1) en vue d'un forage d'un trou profond selon la revendication 1, dans laquelle la pluralité de lames de coupe (6A, 6B, 6C) est du type amovible.

8. Tête de forage (1) en vue d'un forage d'un trou profond selon la revendication 1, dans laquelle la pluralité de lames de coupe (6A, 6B, 6C) est constituée d'une lame de coupe centrale (6A), d'une lame de coupe circonférentielle extérieure (6B) et d'une lame de coupe intermédiaire (6C).
